# EUROPÄISCHE PATENTSCHRIFT

(11) **EP 0 656 531 B1**
(45) Veröffentlichungstag und Bekanntmachung des Hinweises auf die Patenterteilung: **12.08.1998**
(21) Anmeldenummer: 94115557.4
(22) Anmeldetag: 04.10.1994
(51) Int. Cl.: G01J 3/14

(54) **Prismenspektrometer**
Prismenspectrometer
Spectromètre utilisant un prisme

(30) Priorität: 04.11.1993 DE 4337660
(43) Veröffentlichungstag der Anmeldung: 07.06.1995
(73) Patentinhaber: Daimler-Benz Aerospace Aktiengesellschaft, 81663 München (DE)
(72) Erfinder: Schmidt, Elke, D-80339 München (DE)

(56) Entgegenhaltungen:
- DE-A- 812 968
- US-A- 3 048 080
- US-A- 3 645 630
- ZEITSCHRIFT FüR INSTRUMENTENKUNDE, Bd.70, Nr.1, 1962, DE Seiten 9 - 15 W.LEO 'über einen Spiegel-Doppelmonochromator mit Kompensation der Abbildungsfehler'

## Beschreibung

Die Erfindung betrifft ein abbildendes Prismenspektrometer mit doppeltem Strahlendurchgang durch eine Prismeneinrichtung, wobei ein durch einen Eintrittsspalt einfallendes Strahlenbündel mittels eines durch eine Hälfte eines Hohlspiegels gebildeten Kollimators parallel ausgerichtet wird, anschließend die Prismeneinrichtung zum erstenmal durchläuft, hinter der Prismeneinrichtung durch einen schräg zum Strahlengang ausgerichteten Plansplegel reflektiert wird derart, daß das Strahlenbündel die Prismeneinrichtung mit einer vom ersten Durchgang abweichenden Richtung ein zweites Mal durchläuft und anschließend über eine durch die andere Hälfte des Hohlspiegels gebildete Fokussieroptik auf eine Bildebene fokussiert wird, wobei insgesamt ein W-förmiger Strahlenverlauf entsteht.

Prismenspektrometer haben gegenüber Gitterspektrometer einen größeren nutzbaren Spektralbereich aufgrund der bei Gitterspektrometern auftretenden Uberlappung höherer Beugungsordnungen. Durch Abblocken der zweiten Beugungsordnung mittels soq. "Blocking Filter" entsteht eine Lücke im Spektralbereich, so daß für eine kontinuierliche Erfassung eines großen Spektralbereiches Prismenspektrometer erforderlich sind. Für die Verwendung von Prismenspektrometer in der Luft- und Raumfahrt ist eine möglichst kompakte Bauweise erforderlich, für die die sog. "Littrow-Anordnung" bekannt ist (s. zB. "The Infrared Electro-Optical Systems Handbook", Vol. 1: G.J Zissis "Sourses of Radiaton", SPIE, Optical Engeneering Press, 1993, S. 337-341). Bei dieser bekannten Anordnung liegen Eintrittsspalt und Bildebene prinzipbedingt relativ nahe beieinander, was zu konstruktiven Problemen führt.

Aus der Zeitschrift für Instrumentenkunde, Bd. 70, Nr. 1, 1962, S. 9-15 ist ein Spiegel-Doppelmonochromator mit drehbarem verspiegelten Prisma und Kompensation von Abbildungsfehlern durch Verwendung zweier Hohlspiegelteile mit unterschiedlichen Brennweiten bekannt. Diese Anordnung ist jedoch nicht als abbildendes Prismenspektrometer für die Verwendung in der Luft-/ und Raumfahrt geeignet; insbesondere können damit keine durch ein Detektorarray über einen großen Spektralbereich auswertbaren Spektrallinien erzeugt werden.

Es ist daher Aufgabe der vorliegenden Erfindung, ein abbildendes Prismenspektrometer mit großem Spektralbereich zu schaffen, bei dem der Eintrittsspalt und die Bildebene möglichst weit auseinander liegen und welches dennoch mit nur möglichst wenigen abbildenden und damit teueren optischen Elementen auskommt.

Die Lösung dieser Aufgabe gelingt durch ein nach den Merkmalen des Patentanspruchs 1 ausgebildetes Prismenspektrometer.

Gegenüber dem bekannten Prismenspektrometer vom "Littrow"-Typ erfolgt die Kollimation und anschließende Fokussierung des Strahlenbündels durch symmetrische Flächenhälften eines Hohlspiegels. Dadurch wird sowohl der Strahlengang des einfallenden als auch des austretenden Strahlenbündels gefaltet, so daß ein W-förmiger Strahlengang entsteht, wodurch die gesamte Anordnung sehr kompakt wird, der Eintrittsspalt und die Bildebene jedoch auf gegenüberliegenden Seiten bzgl. der Verbindung Hohlspiegel-Prismeneinrichtung angeordnet sind.

Durch die zweimalige, symmetrische Benutzung der Hohlspiegelhälften addieren sich sphärische Aberration, Astigmatismus und Bildfeldwölbung der beiden Spiegel auf dem Hin- und Rückweg, während sich Koma und Verzeichnung genau kompensieren. Vor der Prismenanordnung ist eine Korrektionsoptik bestehend aus einer oder mehreren sphärischen Linsen eingefügt. Die sphärische Aberration der Linse korrigiert im einfachen Durchgang genau die von einem Hohlspiegel verursachte sphärische Aberration, so daß die sphärische Aberration der ersten Spiegelhälfte beim ersten Durchgang durch die Linsenanordnung korrigiert wird, und die sphärische Aberration der Linsen im zweiten Durchgang genau die sphärische Aberration der zweiten Spiegelhälfte aufhebt. Gleichzeitig ist die Korrekturoptik, genau wie die beiden Hohlspiegelhälften, in sich selbst für Koma und Verzeichnung korrigiert. Das kombinierte System aus den beiden Hohlspiegelhälften und der Korrektionsoptik ist frei von Koma, Verzeichnung und sphärische Aberration.

Eine weitere Vergrößerung des Abstandes zwischen Eintrittsspalt und Bildebene läßt sich dadurch erreichen, daß der Hohlspiegel in zwei gleiche Hälften getrennt wird, welche längs ihrer Trennungslinie nach außen geklappt und damit geneigt zueinander angeordnet sind. Die Krümmungsmittelpunkte der beiden Hohlspiegelhälften liegen dann getrennt voneinander, so daß entweder bei gleichbleibendem Abstand zwischen Prismeneinrichtung und Hohlspiegel der Abstand zwischen Eintrittsspalt und Bildebene vergrößert werden kann und damit ggf. das Öffnungsverhältnis oder bei gleichbleibendem Abstand zwischen Eintrittsspalt und Bildebene der Abstand zwischen Hohlspiegel und Prismeneinrichtung verringert werden kann.

Zur Abbildung des erzeugten Spektrums auf ein ebenes Detektorarray empfiehlt sich eine weitere Korrektur mittels eines konvex gekrümmten Umlenkspiegels. Astigmatismus und Bildfeldwölbung der Hohlspiegelhälften und der Korrekturoptik addieren sich und können so von diesem Ebnungsspiegel kompensiert werden. Eine Prismenanordnung führt stets zu in der Bildebene gekrümmten Spektrallinien. Der verkippte Ebnungsspiegel verursacht Verzeichnung, die genau diesen Effekt kompensiert. Daher erhält man in der Bildebene ungekrümmte Spektrallinien.

Von Vorteil wird für die Prismeneinrichtung ein Prismenachromat verwendet, der in bekannter Weise aus zwei gegeneinander gerichteten, unterschiedlichen Prismenkeilen gebildet wird.

Die Erfindung wird im folgenden anhand zweier in den Figuren teilweise schematisch dargestellter Ausführungsbeispiele näher beschrieben.
Es zeigen:
- Figur 1: ein Prismenspektrometer mit einteiligem Hohlspiegel und
- Figur 2: ein Prismenspektrometer mit zweiteiligem Hohlspiegel.

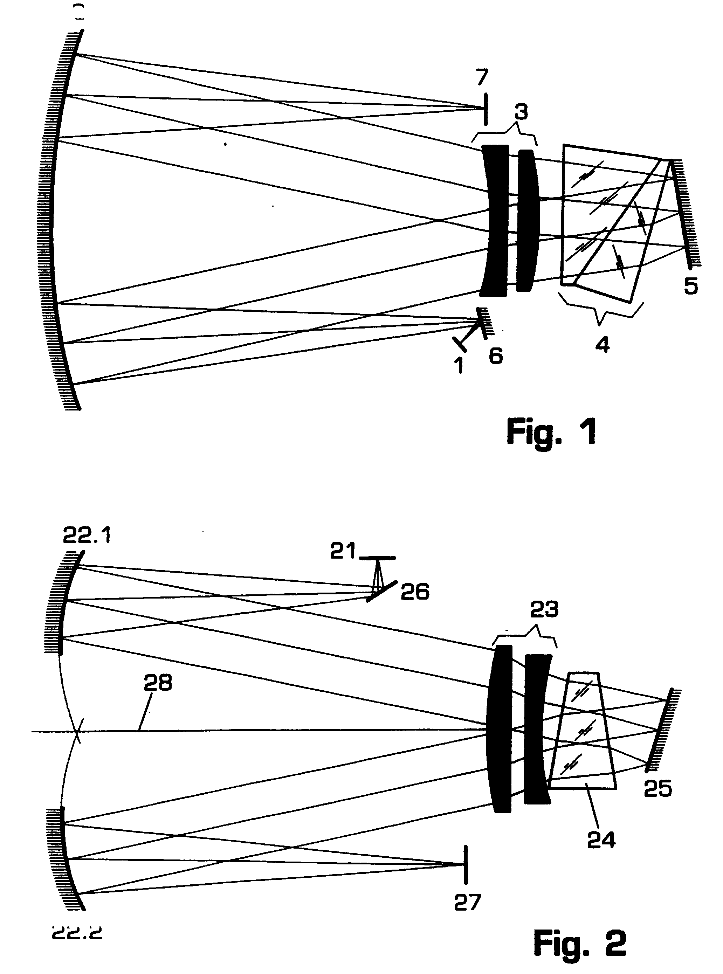

Bei dem in Fig. 1 dargestellten Ausführungsbeispiel für ein Prismenspektrometer wird der Eintrittsspalt 1 nach Umlenkung des Strahlenganges mittels eines leicht sphärisch konvex gekrümmten Umlenkspiegels 6 von der unteren Hälfte eines Hohlspiegels 2 und einer achromatischen Korrekturoptik 3 zur Behebung von sphärischer Aberration und/oder Astigmatismus nach unendlich abgebildet. In dem derart kollimierten Strahlengang ist ein Prismenachromat 4 angeordnet, in dem das Licht in Abhängigkeit von seiner Wellenlänge eine unterschiedliche Ablenkung erfährt, wobei diese Ablenkung jedoch bei Verwendung eines Achromaten weitestgehend linear mit der Wellenlänge verläuft, so daß eine möglichst gleichmäßige spektrale Auflösung erreicht wird. Nachdem das Strahlenbündel das Prisma 4 zum ersten Mal durchlaufen hat, trifft es auf einen Planspiegel 5 ("Littrow-Spiegel"), der gleichzeitig die körperliche Blende des Systems darstellt. Durch die Anordnung der Blende an dieser Stelle ist das Spektrometer praktisch telezentrisch. Der Planspiegel 5 ist so angeordnet, daß das Strahlenbündel nach der Reflexion wieder auf den Prismenachromaten 4 trifft und diesen zum zweiten Mal durchläuft. Beim zweiten Durchgang durch den Prismenachromaten werden die unterschiedlichen Wellenlängen noch stärker separiert. Anschließend durchläuft die Strahlung erneut die Korrekturoptik 3. Danach trifft die kollimierte Strahlung die obere Hälfte des Hohlspiegels 2. Das von dort reflektierte Strahlenbündel wird dabei fokussiert, so daß in der Bildebene 7 dann die ebene Fläche eines Detektorarrays zur Auswertung des erzeugten Spektralmusters angeordnet sein kann.

Bei dem in Fig. 2 dargestellten Ausführungsbeispiel werden zur Kollimation und Fokussierung zwei getrennte Hohlspiegel 22.1 bzw. 22.2 gleicher Krümmung verwendet, deren Krümmungsmittelpunkte jedoch zueinander etwas versetzt sind, so daß die beiden Hohlspiegel bzgl. einer Symetrielinie 28, welche die optische Achse der Korrekturlinsen 23 darstellt, gegensätzlich nach außen verkippt sind; letzteres wird durch die gestrichelt dargestellte Fortführung der gekrümmten Ebene der Hohlspiegel 22.1 bzw. 22.2 verdeutlicht. Im übrigen ist der Strahlenverlauf von der Eintrittsöffnung 21 über den Umlenk- und Ebnungsspiegel 26 zum Kollimationsspiegel 22.1 mit anschließendem zweimaligen Durchgang durch die Korrekturoptik 23 sowie durch das Prisma 24 nach Reflexion am Planspiegel 25 und weiterer Reflexion am Fokussierspiegel 22.2 auf die Bildebene 27 ähnlich wie in Fig. 1. Durch die Verkippung von Kollimationsspiegel 22.1 und Fokussierspiegel 22.2 sind jedoch die Einrittsöffnung 21 und die Bildebene 27 noch weiter voneinander entfernt, so daß ein in der Bildebene 27 angeordneter Detektor leichter untergebracht werden kann ohne den Strahlengang an irgendeiner Stelle zu stören. Außerdem kann durch diese Bauweise ohne Beeinträchtigung der Abbildungsqualität ein noch größeres Öffungsverhältnis erzielt werden. Bei bisher bekannten Prismenspektrometer wird nämlich das Öffnungsverhältnis durch die geometrische Anordnung begrenzt, da ab einer bestimmten Öffnung Eintrittsspalt oder Detektor im Strahlengang liegen.

## Patentansprüche

1. Abbildendes Prismenspektrometer bestehend aus:
einem Eintrittsspalt (1),
einem Kollimator, der durch eine erste Hälfte eines Hohlspiegels gebildet ist (2,22.1),
einer Prismeneinrichtung (4,24),
einem schräg zum Strahlengang ausgerichteten Planspiegel (5,25),
einer Fokussieroptik, die durch eine zweite Hälfte des Hohlspiegels gebildet ist (2, 22.2), und
einer Bildebene (7,27);
mit doppeltem Strahlendurchgang durch die Prismeneinrichtung, wobei ein durch den Eintrittsspalt einfallendes Strahlenbündel mittels des durch die erste Hälfte des Hohlspiegels gebildeten Kollimators parallel ausgerichtet wird, anschließend die Prismeneinrichtung zum erstenmal durchläuft, hinter der Prismeneinrichtung durch den schräg zum Strahlengang ausgerichteten Planspiegel reflektiert wird derart, daß das Strahlenbündel die Prismeneinrichtung mit einer vom ersten Durchgang abweichenden Richtung ein zweites Mal durchläuft und anschließend über die durch die zweite Hälfte des Hohlspiegels gebildete Fokussieroptik auf die Bildebene fokussiert wird, wobei insgesamt ein W-förmiger Strahlenverlauf entsteht, **dadurch gekennzeichnet,**
daß die Prismeneinrichtung (4, 24) feststehend ist,
daß zwischen der Prismeneinrichtung (4, 24) und dem bzw. den Hohlspiegeln (2; 22.1, 22.2) im mittleren Bereich des W-förmigen, hin- und rücklaufenden Strahlenbündels eine einzige Linsenoptik (3, 23) zur komafreien Korrektur von sphärischer Aberration derart angeordnet ist,
daß die optische Achse der Linsenoptik (3, 23) symmetrisch zu den unterschiedlichen Richtungen des hin- und rücklaufenden Strahlenbündels verläuft und
daß in der Bildebene (7; 27) ein Detektorarray angeordnet ist.

2. Prismenspektrometer nach Anspruch 1, **dadurch gekennzeichnet,** daß die beiden Hälften (22.1; 22.2) des Hohlspiegels getrennt und zueinander geneigt angeordnet sind.

3. Prismenspektrometer nach Anspruch 1 oder 2 **dadurch gekennzeichnet,** daß zwischen dem Eintrittsspalt (1, 21) und dem als Kollimator dienenden Teil des Hohlspiegels (2; 22.1) ein konvex gekrümmter Umlenkspiegel (6, 26) angeordnet ist.

4. Prismenspektrometer nach einem der Ansprüche 1 bis 3, **dadurch gekennzeichnet,** daß die Prismeneinrichtung (4) ein aus zwei Prismenkeilen gebildeter Prismenachromat ist.

## Claims

1. An imaging prism spectrometer consisting of:
an entrance slit (1),
a collimator which is formed by the first half of a concave mirror (2, 22.1),
a prism device (4, 24),
a plane mirror (5, 25) disposed obliquely to the beam path,
an optical focusing element which is formed by a second half of the concave mirror (2, 22.2), and
a focal plane (7, 27);
having a passage of the beam which is doubled by the prism device, wherein a beam which is incident through the entrance slit is subjected to parallel alignment by means of the collimator formed by the first half of the concave mirror, subsequently passes through the prism device for the first time, is reflected behind the prism device by a plane mirror which is aligned obliquely to the beam path in such a way that the beam passes through the prism device a second time in a direction which differs from its first passage and is subsequently focused on to the focal plane via the optical focusing element formed by the second half of the concave mirror, wherein a W-shaped beam course is produced as a whole, **characterised in that**
the prism device (4, 24) is fixed,
that a single lens system (3, 23) for the coma-free correction of spherical aberration is disposed between the prism device (4, 24) and the concave mirror or concave mirrors (2; 22.1, 22.2) in the middle region of the W-shaped beam which travels forwards and backwards, in such a way that the optical axis of the lens system (3, 23) runs symmetrically to the different directions of the beam which travels forwards and backwards, and
that a detector array is disposed in the focal plane (7; 27).

2. A prism spectrometer according to claim 1, **characterised in that** the two halves (22.1; 22.2) of the concave mirror are separated and are disposed inclined in relation to each other.

3. A prism spectrometer according to claim 1 or 2, **characterised in that** a tilted mirror (6, 26) of convex curvature is disposed between the entrance slit (1, 21) and the part of the concave mirror (2; 22.1) which serves as the collimator.

4. A prism spectrometer according to any one of claims 1 to 3, **characterised in that** the prism device (4) is an achromatic prismatic lens formed from two prismatic wedges.

## Revendications

1. Spectromètre à prismes à reproduction comprenant une fente d'entrée (1), un collimateur qui est formé d'une première moitié d'un miroir concave (2; 22.1), un système de prismes (4, 24), un miroir plan (5, 25) incliné par rapport à la marche des rayons, une optique de focalisation qui est formée par la seconde moitié du miroir concave (2, 22.2) et un plan d'image (7, 27), avec un double passage des rayons à travers le système de prismes, dans lequel un faisceau de rayons qui entre à travers la fente d'entrée est rendu parallèle par le collimateur formé de la première moitié du miroir concave, puis traverse pour la première fois le système de prismes, derrière le système de prismes, est réfléchi par le miroir plan, incliné par rapport à la marche des rayons, de telle sorte que le faisceau de rayons traverse une seconde fois le système de prismes avec une direction différente du premier passage puis est focalisé sur le plan d'image par l'optique de focalisation formée par la seconde moitié du miroir concave, donnant ainsi une marche de rayons en forme de W, caractérisé par le fait que le système de prismes (4, 24) est fixe, qu'une unique optique à lentilles (3, 23) pour la correction sans coma de l'aberration sphérique est disposée entre le système de prismes (4, 24) et le ou les miroirs concaves (2, 22.1, 22.2), dans la région médiane de la marche incidente et émergente en forme de W des rayons, de telle sorte que l'axe optique de l'optique à lentilles (3, 23) soit symétrique par rapport aux différentes directions du faisceau de rayons incident et émergent et par le fait qu'une matrice de détecteurs est placée dans le plan d'image (7, 27).

2. Spectromètre à prismes selon la revendication 1, caractérisé par le fait que les deux moitiés (22.1, 22.2) du miroir concave sont séparées et sont inclinées l'une par rapport à l'autre.

3. Spectromètre à prismes selon la revendication 1 ou 2, caractérisé par le fait qu'un miroir de déviation (6, 26) convexe est disposé entre la fente d'entrée (1, 21) et la partie du miroir concave (2, 22.1) servant de collimateur.

4. Spectromètre à prismes selon une des revendications 1 à 3, caractérisé par le fait que le système de prismes (4) est un achromate de prismes formé de deux prismes.
